# EUROPÄISCHE PATENTSCHRIFT

(11) **EP 1 851 256 B1**
(45) Veröffentlichungstag und Bekanntmachung des Hinweises auf die Patenterteilung: **18.08.2010**
(21) Anmeldenummer: 06707238.9
(22) Anmeldetag: 24.02.2006
(51) Int. Cl.: C08F 220/00

(54) **PHOSPHOR-HALTIGE COPOLYMERE, VERFAHREN ZU IHRER HERSTELLUNG UND DEREN VERWENDUNG**
PHOSPHORUS-CONTAINING COPOLYMERS, METHOD FOR THE PRODUCTION THEREOF, AND USE THEREOF
COPOLYMERES CONTENANT DU PHOSPHORE, PROCEDE DE PRODUCTION ET UTILISATION DE CES COPOLYMERES

(30) Priorität: 25.02.2005 DE 102005008671
(43) Veröffentlichungstag der Anmeldung: 07.11.2007
(73) Patentinhaber: Construction Research & Technology GmbH, 83308 Trostberg (DE)
(72) Erfinder: KRAUS, Alexander, 83552 Evenhausen (DE); GRASSL, Harald, 83471 Schönau (DE); HARTL, Angelika, 83342 Tacherting (DE); BRANDL, Martina, 83278 Traunstein (DE)
(74) Vertreter: Dey, Michael
(86) Internationale Anmeldenummer: PCT/EP2006/001694
(87) Internationale Veröffentlichungsnummer: WO 2006/089759

(56) Entgegenhaltungen:
- EP-A- 1 110 981
- WO-A-2005/019288

## Beschreibung

Die vorliegende Erfindung betrifft phosphorhaltige Copolymere, Verfahren zu deren Herstellung sowie deren Verwendung als Zusatzmittel für wässrige Feststoff-Suspensionen auf Basis von mineralischen Bindemitteln oder anderen anorganischen oder organischen Partikeln.

Die erfindungsgemäßen Copolymere eignen sich insbesondere hervorragend als Zusatzmittel für hydraulische Bindemittel, insbesondere Zement, aber auch Kalk, Gips und Anhydrit. Die Verwendung dieser Copolymere führt zu einer deutlichen Verbesserung der daraus hergestellten Baustoffe während des Verarbeitungs- bzw. Erhärtungsprozesses. Weiterhin sind die erfindungsgemäßen Polymere auch sehr gut zur Dispergierung von anderen anorganischen Partikeln, wie Metallpulvern in Wasser oder organischen Lösemitteln geeignet.

In wässrigen Suspensionen von pulverförmigen anorganischen oder organischen Substanzen, wie hydraulischen Bindemitteln (Zement, Kalk, Gips oder Anhydrit), Gesteinsmehl, Silikatmehl, Kreide, Tonen, Porzellanschlicker, Talkum, Pigmenten, Ruß, Metall- oder Kunststoffpulvern, werden oft Zusatzmittel in Form von Dispergiermitteln zugesetzt, um ihre Verarbeitbarkeit, d.h. Knetbarkeit, Fließfähigkeit, Spritzbarkeit, Streichfähigkeit oder Pumpbarkeit, zu verbessern. Diese Zusatzmittel sind in der Lage, durch Adsorption an die Oberflächen der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit.

Bei der Herstellung von Baustoffnüschungen, die hydraulische Bindemittel wie Zement, Kalk, Gips oder Anhydrit enthalten, lässt sich dieser Effekt besonders vorteilhaft nutzen, da zur Erzielung einer verarbeitbaren Konsistenz ansonsten wesentlich mehr Wasser benötigt würde als für den nachfolgenden Hydratations- bzw. Erhärtungsprozess erforderlich wäre. Das nach dem Erhärten allmählich verdunstende Wasser hinterlässt Hohlräume, welche die mechanischen Festigkeiten und Beständigkeiten der Baukörper signifikant verschlechtern.

Um den im Sinne der Hydratation überschüssigen Wasseranteil zu reduzieren und/oder die Verarbeitbarkeit bei einem vorgegebenen Wasser/Bindemittel-Verhältnis zu optimieren, werden Zusatzmittel eingesetzt, die im allgemeinen als Wasserreduktions- oder Fließmittel und im Englischen als Superplasticizer bezeichnet werden.

Die nach wie vor am häufigsten verwendeten Fließmittel sind Polykondensationsprodukte auf der Basis von Naphthalin- oder Alkylnaphthalinsulfonsäuren (vgl. EP-A 214 412) sowie Melamin-FormaldehydHarze, die Sulfonsäuregruppen enthalten (vgl. DE-PS 16 71 017).

Diese Fließmittel haben jedoch den Nachteil, dass ihre gute verflüssigende Wirkung - insbesondere im Betonbau - selbst bei relativ hohen Dosierungen nur über eine relativ kurze Zeitspanne bestehen bleibt. Dieser Abfall der Fließfähigkeit von Betonmischungen wird auch als "Slump-Loss" bezeichnet. Er führt insbesondere dann zu Problemen, wenn zwischen der Herstellung des Betons und dessen Einbau größere Zeitspannen liegen, wie sie sich oft durch lange Transport- oder Förderwege ergeben.

Weiterhin kann die Freisetzung des herstellungsbedingt enthaltenen toxischen Formaldehyds zu beträchtlichen arbeitshygienischen Belastungen führen, wenn die Anwendung im Innenbereich (Betonfertigteilherstellung oder Gipskartonplatten-Trocknung) oder im Berg- bzw. Tunnelbau erfolgt.

Um diese Nachteile zu umgehen, wurden auch formaldehydfreie Fließmittel auf der Basis Maleinsäuremonoestern und Styrol entwickelt (vgl. EP-A 306 449). Zwar kann mit diesen Zusatzmitteln eine hohe Dispergierleistung über einen ausreichenden Zeitraum (geringer Slump-Loss) gewährleistet werden, jedoch gehen diese positiven Eigenschaften bei Lagerung der wässrigen Zubereitungen dieser Fließmittel schnell verloren. Die geringe Lagerungsstabilität dieser Fließmittellösungen ist auf die leichte Hydrolysierbarkeit der Maleinsäuremonoester zurückzuführen.

Um die Lagerstabilität zu erhöhen, wurden verschiedene hydrolysestabile Fließmittel entwickelt. Bei allen diesen Fließmitteln handelt es sich um Copolymere aus ethylenisch ungesättigten Carbonsäuren (wie z. B. Acrylsäure, Methacrylsäure oder Maleinsäure bzw. deren Salze) und Poly(alkylenoxiden) mit einer polymerisierbaren Endgruppe (wie z. B. Methacrylate, Allylether oder Vinylether). Der Einbau dieser langkettigen Monomere in eine Polymerkette führt zu Polymeren mit einer kammartigen Struktur (vgl. US 5,707,445, EP 1110 981 A2, EP 1 142 847 A2).

Diese Kammpolymere zeichnen sich neben einer hohen Lagerbeständigkeit auch durch eine deutlich verbesserte Wirksamkeit im Vergleich zu Fließmitteln auf Lignin-, Naphthalin- oder Melaminkondensat-Basis aus.

Nach einer weithin akzeptierten Theorie beruht die Wirksamkeit der Fließmittel auf zwei unterschiedlichen Effekten. Zum einen adsorbieren die negativ geladenen Säuregruppen der Fließmittel auf der durch Calciumionen positiv geladenen Zementkornoberfläche. Die so entstehende elektrostatische Doppelschicht (Zeta Potential) führt zu einer elektrostatischen Abstoßung zwischen den Partikeln. Die durch die Zetapotentiale verursachten Abstoßungskräfte haben jedoch nur geringe Reichweiten (vgl. H. Uchikawa, Cement and Concrete Research 27 [1] 37-50 (1997)).

Weiterhin verhindert jedoch auch die physikalische Anwesenheit des adsorbierten Fließmittels, dass die Oberflächen der Zementpartikel in direkten Kontakt miteinander kommen können. Dieser sterische Abstoßungseffekt wird durch die nicht-adsorbierten Seitenketten der oben erwähnten Kammpolymere drastisch verstärkt (vgl. K.Yoshioka, J. Am Ceram. Soc. 80 [10] 2667-71 (1997)). Es liegt auf der Hand, dass sich der sterisch bedingte Abstoßungseffekt sowohl durch die Länge der Seitenketten, als auch durch die Anzahl der Seitenketten pro Hauptkette beeinflussen lässt. Andererseits kann eine zu hohe Seitenkettendichte bzw. -länge die Adsorption auf der Zementkornoberfläche behindern.

Im Verlaufe der letzten Dekade wurden unzählige Fließmittel auf der Basis von Polycarbonsäureethern entwickelt. Dabei hat sich gezeigt, dass sich die Polymere nicht nur hinsichtlich ihres Wasserreduktionsvermögens unterscheiden, sondern dass auch eine Optimierung zugunsten eines besonders guten Slump-Erhalts möglich ist. Letzteres wird durch eine besonders hohe Dichte an Seitenketten erreicht. Allerdings weisen diese Polymere dann ein deutlich geringeres Wasserreduktionsvermögen auf, da die hohe Seitenkettendichte die Adsorption des Fließmittels auf die Zementpartikel behindert. Bislang waren alle Versuche, beide erwünschten Eigenschaften - gute Wasserreduktion und lange Verarbeitbarkeit - in einem Polycarboxylat-Ether Polymer zu vereinen, wenig erfolgreich. Durch Zugabe von Verzögerers lässt sich zwar die Verarbeitbarkeitsdauer auch bei Betonen mit stark verringertem Wasseranteil erhöhen, jedoch leidet dann die Frühfestigkeit stark darunter. Eine hohe Frühfestigkeit ist jedoch aus ökonomischen Gründen unverzichtbar, um einen zügigen Baufortschritt zu gewährleisten.

Der vorliegenden Erfindung lag daher die Aufgabe zugrunde, Copolymere zu entwickeln, welche die genannten Nachteile des Standes der Technik nicht aufweisen, sondern bei sehr guter Wasserreduktion das Erhärten des Betons kaum verzögern und dennoch eine lange Verarbeitbarkeit des Betons gewährleisten.

Diese Aufgabe wurde erfindungsgemäß durch die Copolymere gemäß Anspruch 1 gelöst.

Es hat sich überraschenderweise gezeigt, dass durch Copolymerisation von ungesättigten Verbindungen, die Phosphonatgruppen und/oder Phosphorsäureestergruppen enthalten, mit ungesättigten Polyalkylenoxid-Derivaten Copolymere erhalten werden, welche die oben beschriebene Eigenschaften aufweisen.

Die erfindungsgemäßen Fließmittel werden durch radikalische Polymerisation einer vinylischen Poly(alkylenoxid-)Verbindung (A) mit einer ethylenisch ungesättigten Monomerverbindung (B) hergestellt.

Die erfindungsgemäß eingesetzte Poly(alkylenoxid)-Verbindungen (A) entspricht hierbei der allgemeinen Formel (I)

R¹-O-(CₘH₂ₘO)ₙ₋₁-CₘH₂ₘ-Z (I)

R¹ hat dabei folgende Bedeutung: Ein Wasserstoffatom, ein aliphatischer Kohlenwasserstoffrest mit 1 bis 20 C-Atomen, ein cycloaliphatischer Rest mit 5 bis 12 C-Atomen oder ein Arylrest mit 6 bis 14 C-Atomen, der gegebenenfalls noch substituiert sein kann. Für die Indices gilt: m = 2 bis 4 sowie n = 1 bis 250, wobei m bevorzugt die Werte 2 oder 3 und n bevorzugt Werte von 5 bis 250 und noch stärker bevorzugt Werte von 20 bis 135 annehmen kann.

Als bevorzugte Cycloalkylreste sind Cyclopentyl- oder Cyclohexylreste, als bevorzugte Arylreste sind Phenyl- oder Naphthylreste, die insbesondere noch durch Hydroxyl-, Carboxyl- oder Sulfonsäuregruppen substituiert sein können, anzusehen.

Der Baustein Z in Formel (I) kann im Rahmen der vorliegenden Erfindung folgende Bedeutungen haben: 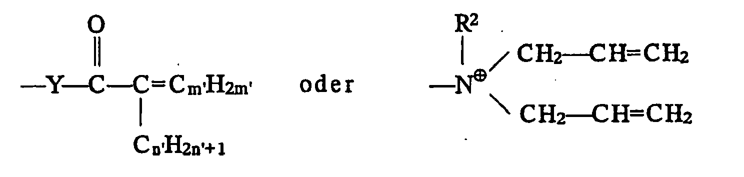 Hierbei kann m' = 1 bis 4 und n' = 0, 1 oder 2 sein, wobei m' = 1 und n = 0 oder 1 bevorzugt werden. Y kann O oder NR² sein und R² kann für H, einen Alkylrest mit 1 bis 12 C-Atomen oder einen Arylrest mit 6 bis 14 C-Atomen sowie für

-CₘH₂ₘ-(-O-CₘH₂ₘ)ₙ₋₁-OR¹

stehen, wobei R¹, m und n vorstehend genannte Bedeutung besitzen. Besonders bevorzugt sind R²= H, CH₃ oder C₂H₅.

Als ethylenisch ungesättigte Monomer-Verbindung (B) im Rahmen der vorliegenden Erfindung können Verbindungen der allgemeinen Formel (II) eingesetzt werden:

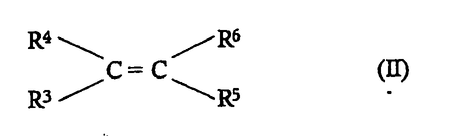

Hierbei können R³, R⁴ und R⁵ unabhängig voneinander einem Wasserstoffatom oder einer C₁-C₄-Alkylgruppe, C₆-C₁₀-Arylgruppe (die ggf. noch durch Hydroxy-, Carboxy- und/oder C₁-C₄-Alkylgruppen substituiert sein können) entsprechen.

R⁶ kann hierbei für folgende Reste stehen:
-PO₃H₂

   Phosphonsäuregruppe,
CH₂-N(CH₂-PO₃H₂)₂

   Methylenamin-N,N-bismethylenphosphonsäure, 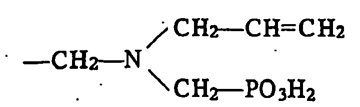
Methylenamin-N-allyl-N-methylenphospho nsäure,
-(CH₂)ₓ-PO₃H₂ (x =1-12) C₁-C₁₂-Alkylphosphonsäure,
-(CH₂)ₓ-O-PO(OH)₂ (x =1-12) C₁-C₁₂-Hydroxyalkylphosphorsäureester,
-CO-O-(CH₂)ₓPO₃H₂ (x =1-12) Carbonsäureester einer C₁-C₁₂-Hydroxyalkylphosphonsäure,
-CO-O-(CH₂)ₓ-O-PO(OH)₂ (x =1-12) Carbonsäureester eines C₁-C₁₂-Hydroxyalkylphosphorsäureesters,
-CO-O-(C_{n"}H_{2n"}O)ₓ-PO₃H₂ (n" = 2 oder 3, x =1-12) Carbonsäureester einer (Poly-)alkylenglykolphosphonsäure,
-CO--NH-(C_{n"}H_{2n"}O)ₓ-PO₃H₂ (n" = 2 oder 3, x =1-12) Carbonsäureamid einer Amino-(poly-) alkylenglykolphosphonsäure,
-CO-O-CH₂-CH(OH)-CH₂O-PO₃H₂ Carbonsäureester einer Propandiolphosphonsäure,
-CO-O-(CH₂)ₓ-N-(CH₂-PO₃H₂)₂ (x = 1-12) Carbonsäureester eines bis-methylphosphonierten C₁-C₁₂-Hydroxyalkylamins, 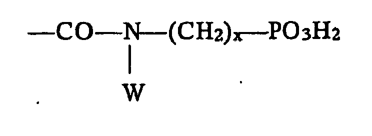
(x = 1 -12) Carbonsäureamid einer C₁-C₁₂ -Aminoalkylphosphorsäure (mit W = Hoder -(CH₂)ₓ-PO₃H₂), 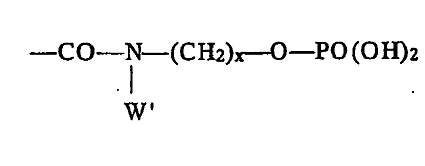
(x = 1 -12) Carbonsäureamid eines C₁-C₁₂-Aminoalkylphosphorsäure esters (W' = H, -(CH₂)ₓ-O-PO(OH)₂, 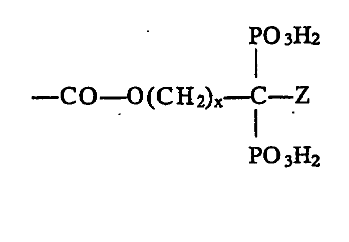
(Z= H, OH, NH₂) Carbonsäureester eines bis-phosphonierten C₁-C₁₂-Hydroxyalkylnitrils, esters oder -aldehyds, 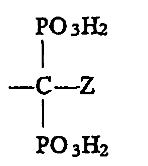
(Z= H, OH, NH₂) Bisphosphonate mit H-, OH- oder NH₂-Endgruppen,
Ar- PO₃H₂ (Ar = C₆-C₁₀) C₆-C₁₀-Arylphosphonsäure,
-Ar-O-PO(OH)₂ (Ar = C₆-C₁₀) C₆-C₁₀- Arylphosphorsäureester,
-CO-O-Ar-PO₃H₂ (Ar = C₆-C₁₀) Carbonsäureester einer C₆-C₁₀-Hydroxyarylphosphonsäure,
-CO-O-Ar-O- PO(OH)₂ (Ar = C₆-C₁₀) Carbonsäureester eines C₆-C₁₀-Hydroxyarylphosphorsäureesters,
-CO-NH-Ar- PO₃H₂ (Ar = C₆-C₁₀) Carbonsäureamid einer C₆-C₁₀-Aminoarylphosphonsäure,
-CO-NH-Ar-O-PO(OH)₂ (Ar = C₆-C₁₀) Carbonsäureamid eines C₆-C₁₀-Aminoarylphosphorsäureesters

Es ist im Rahmen der vorliegenden Erfindung ohne Weiteres möglich, dass die aromatischen Reste Ar noch OH-, C₁-C₄-Alkyl- oder COOH-Substituenten aufweisen. Außerdem können die Phosphorsäuren oder sauren Phosphatester in Form ihrer Alkali- (Natrium, Kalium), Erdalkali- (Calcium, Magnesium) oder Ammoniumsalze vorliegen.

Für die erfindungsgemäß hergestellten Copolymere werden vorzugsweise folgende phosphorhaltigen Monomer-Verbindungen eingesetzt:
Hydroxyalkylacrylate oder Hydroxyalkylmethacrylate deren OH-Gruppe mit Phosphonsäure verestert ist, Hydroxyalkylmaleamide oder -imide, deren OH-Gruppe mit Phosphonsäure verestert ist sowie Vinylphosphonsäure.

Die erfindungsgemäßen Copolymere können molare Verhältnisse der vinylischen Poly(alkylenoxid-)Verbindung (A) und der ethylenisch ungesättigten Monomer-Verbindung (B) von 1 : 0,01 bis 1 : 100 aufweisen. Bevorzugt sind aber Verhältnisse von 1 : 0,1 bis 1 : 50, besonders bevorzugt sind Verhältnisse von 1 : 0,5 bis 1 : 10 und ganz besonders bevorzugt sind Verhältnisse von 1 :0,5 bis 1 : 3.

Bei den erfindungsgemäßen Copolymern handelt es sich insbesondere um wasserlösliche Copolymere. Sie weisen bevorzugt eine Löslichkeit bei 20 °C in g/l von mindestens 3, mehr bevorzugt von mindestens 5, noch mehr bevorzugt von mindestens 10 und am meisten bevorzugt von mindestens 50 oder von mindestens 100 auf.

Es ist im Rahmen der vorliegenden Erfindung möglich, dass die Copolymere noch zusätzlich 0 bis 70 Gew.-%, bezogen auf die Summe der Komponenten (A) und (B), einer ethylenisch ungesättigten Monomer-Verbindung (C) der allgemeinen Formel (III) enthalten 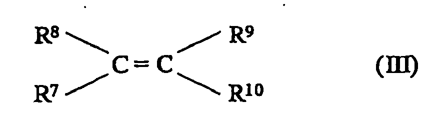 wobei R⁷ = H, CH₃, COOM, COOR¹¹, CONR¹¹R¹¹, R⁸ = H, ein ggf. mit Hydroxyl-, Carboxyl- oder C₁-C₄-Alkylgruppen substituierter C₆-C₁₄-Arylrest, R⁹ = H, CH₃ oder CH₂-COOR¹¹, R¹⁰ = H, CH₃, COOM, COOR¹¹, ein ggf. mit Hydroxyl-, Carboxyl- oder C₁-C₄-Alkylgruppen substituierter C₆-C₁₄-Arylrest, OR¹², SO₃M, CONH-R¹³-SO₃M, R¹¹ = H, C₁-C₁₂-Alkyl, C₁-C₁rHydroxyalkyl, -(CH₂)ₓ-SO₃M, 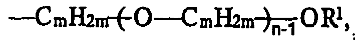 R¹² = Acetyl, R¹³ = ein linearer oder verzweigter C₁-C₆-Alkylenrest, M = H, Alkali, Erdalkali oder Ammonium bedeuten, R⁷ und R¹⁰ zusammen für O-CO-O stehen können und R¹, m, n und x oben genannte Bedeutung besitzen.

Die Herstellung der erfindungsgemäßen Copolymere erfolgt mittels radikalischer Polymerisation, nach Methoden, die dem Fachmann auf dem Gebiete der Polymerisation bekannt sind. Das bevorzugte Lösemittel zur Polymerisation ist Wasser. Die Generierung von Radikalen kann entweder durch thermische Zersetzung von geeigneten Azoinitiatoren (z. B. 2,2'-Azobis(2-methylpropionamidin) dihydrochlorid (CAS 2997-92-4), 2,2'-Azobis[2-(2-imidazolin-2yl)propan] dihydrochlorid (CAS 27776-21-2) oder 4,4'-Azobis[4-cyanopentansäure] (CAS 2638-94-0), photochemisch oder durch Verwendung eines Redox-Systems erfolgen. Besonders bewährt hat sich hierbei ein Redoxsystem aus Wasserstoffperoxid, Eisen-III-Sulfat und Rongalit.

Die Reaktionstemperaturen liegen im Falle der Azoinitiatoren zwischen 30 °C und 150 °C, bevorzugt zwischen 40 °C und 100 °C. Im Falle der photochemischen oder Redox-Radikalerzeugung können die Reaktionstemperaturen zwischen -15° C und 150 °C liegen, bevorzugt sind Temperaturen zwischen -5 °C und 100 °C, ganz besonders bevorzugt sind jedoch Temperaturen zwischen 0 °C und 30 °C. Die Monomere können je nach Reaktivität entweder vor Beginn der Polymerisation komplett vorgelegt oder auch im Verlaufe der Polymerisation zudosiert werden.

Werden solche phosphorhaltigen Monomere verwendet, die zur Homopolymerisation neigen und darüber hinaus auch noch eine höhere Reaktivität als die Makromonomere aufweisen, sollten diese im Verlaufe der Polymerisation so zudosiert werden, dass deren Monomerkonzentrationen in etwa konstant bleiben. Ansonsten würde sich die Polymerzusammensetzung im Verlaufe der Polymerisation stark ändern.

Ein weiterer Gegenstand der vorliegenden Erfindung ist die Verwendung der erfindungsgemäßen Copolymere als Dispergiermittel für wässrige Feststoff-Suspensionen, wobei die entsprechenden Copolymere in einer Menge von 0,01 bis 5 Gew.-%, bezogen auf die jeweilige Feststoff-Suspension, eingesetzt werden.

Es ist im Rahmen der vorliegenden Erfindung möglich, dass die entsprechende Feststoff-Suspension organische oder anorganische Partikel enthält, die ausgewählt sind aus der Gruppe Gesteinsmehl, Silikatmehl, Kreide, Tone, Porzellanschlicker, Talkum, Pigmente, Ruß sowie Metall und Kunststoffpulver.

Besonders bevorzugt werden die erfindungsgemäßen Copolymere für hydraulische Bindemittelsuspensionen auf der Basis von Zement, Kalk, Gips und Anhydrit Die erfindungsgemäßen Copolymere verzögern bei sehr gutem Wasserreduktionsvermögen hierbei kaum das Erhärten des Betons und gewährleisten eine lange Verarbeitbarkeit des Betons.

Die nachfolgenden Beispiele sollen die Erfindung näher veranschaulichen.

### Beispiele

### A Allgemeine Vorschriften zur Synthese von methacrylatbasierten Dispergiermitteln mit Phosphorsäureestergruppen

### Variante A: Redox-Initiierung

Ein temperierbarer 1000 ml Doppelwandreaktor wird mit KPG-Rührer, Stickstoffeinleitung und einer Dosiereinrichtung für Wasserstoffperoxid ausgestattet. Die Monomere (Mengen gemäß Tabelle 1) werden zusammen mit 10 mol-% Regler (z.B. Mercaptopropionsäure, Mercaptoethanol oder Natriumphosphit), 30 mol-% Reduktionsmittel (z.B. Rongalit) sowie 0,2 mol-% FeSO₄*H₂O (jeweils bezogen auf die Molmenge der Monomere) im Doppelwandreaktor vorgelegt. Um zu vermeiden, dass die Viskosität im Verlaufe der Polymerisation zu stark anwächst, wird nun soviel Wasser zugegeben, dass eine ca. 40-50 %ige Monomerlösung entsteht. Diese Lösung wird durch Durchleiten des Inertgases (z.B. Stickstoff) sauerstofffrei gemacht und auf 15 °C temperiert.

Anschließend wird der pH-Wert auf ca. 2-3 eingestellt.

Zum Starten der Reaktion wird nun über die Dosiereinrichtung ein Gemisch aus 1g Wasserstoffperoxid (30%ig) und 49g Wasser über einen Zeitraum von 2 Stunden in den Doppelwandreaktor gepumpt. (Perfusorpumen aus dem medizinischen Bereich erlauben eine besonders exakte Kontrolle der Dosierrate.)

Es wird noch eine weitere Stunde gerührt und anschließend der pH-Wert auf 7 gestellt. Die so erhaltene Polymerlösung ist gebrauchsfertig.

### Variante B: Verwendung von Azoinitiatoren

Ein temperierbarer 1000 ml Doppelwandreaktor wird mit KPG-Rührer und Stickstoffeinleitung ausgestattet.

Die Monomere (Mengen gemäß Tabelle 1) werden zusammen mit 0,2 mol-% VAZO 44 (wasserlöslicher Azoinitiator) und 5 mol-% Regler (z.B. Mercaptopropionsäure, Mercaptoethanol oder Natriumphosphit) im Doppelwandreaktor vorgelegt. Um zu vermeiden, dass die Viskosität im Verlaufe der Polymerisation zu stark anwächst, wird nun soviel Wasser zugegeben, dass eine ca. 40-50 %ige Monomerlösung entsteht. Diese Lösung wird durch Durchleiten des Inertgases (z.B. Stickstoff) sauerstofffrei gemacht und auf pH-Wert 2-3 eingestellt.

Anschließend wird auf 90 °C erhitzt. Diese Temperatur wird über einen Zeitraum von 3 Stunden beibehalten. Nach dem Abkühlen wird der pH-Wert auf 7 gestellt. Die so erhaltene Polymerlösung ist gebrauchsfertig.

**Tabelle 1**

| **Nr.** | **Beispiel** | **MPEG-MA** | | **EGMAP** | **MAS** | **HEM A** | **Variante** | | **Mₙ (GPC)** |
|---|---|---|---|---|---|---|---|---|---|
| | | **MW** | **[mol]** | **[mol]** | **[mol]** | **[mol]** | **A** | **B** | **[g/mol]** |
| 1 | 1 | 500 | 0,2 | 0,12 | 0 | 0 | X | | 21400 |
| 2 | 2 | 500 | 0,2 | 0,06 | 0,06 | 0 | X | | 22100 |
| 3 | 3 | 750 | 0,2 | 0,12 | 0 | 0 | X | | 23070 |
| 4 | 4 | 750 | 0,2 | 0,16 | 0 | 0 | X | | 22120 |
| 5 | 5 | 1100 | 0,15 | 0,15 | 0 | 0 | X | | 27700 |
| 6 | 6 | 1100 | 0,15 | 0,12 | 0 | 0 | X | | 31800 |
| 7 | 7 | 2000 | 0,1 | 0,1 | 0 | 0 | X | | 45220 |
| 8 | 8 | 2000 | 0,1 | 0,12 | 0 | 0 | X | | 41900 |
| 9 | 9 | 2000 | 0,1 | 0,06 | 0,06 | 0 | X | | 49320 |
| 10 | 10 | 2000 | 0,1 | 0,12 | 0 | 0,2 | X | | 43440 |
| 11 | 11 | 2000 | 0,1 | 0,1 | 0 | 0,3 | X | | 45910 |
| 12 | 12 | 1100 | 0,15 | 0,15 | 0 | 0 | | X | 35330 |
| 13 | 13 | 2000 | 0,1 | 0,12 | 0 | 0 | | X | 52220 |
| 14 | 14 | 5000 | 0,05 | 0,1 | 0 | 0 | X | | 61780 |
| 15 | 15 | 5000 | 0,05 | 0,1 | 0,05 | 0 | X | | 69110 |
| 16 | 16 | 5000 | 0,05 | 0,1 | 0,05 | 0,2 | X | | 70050 |
| 17 | 17 | 5000 | 0,05 | 0,1 | 0,05 | 0,4 | X | | 68510 |
| 18 | 18 | 5000 | 0,05 | 0,15 | 0 | 0 | | X | 72300 |
| 19 | 19 | 10000 | 0,025 | 0,1 | 0 | 0,2 | X | | 66370 |
| 20 | 20 | 10000 | 0,025 | 0,1 | 0 | 0,4 | X | | 71600 |

| | | | | | | | | | |
|---|---|---|---|---|---|---|---|---|---|
| MPEG-MA = Polyethylenglycolmonomethylethermethacrylat, EGMAP = Ethylenglycolmethacrylatphosphat, MAS = Methacrylsäure, HEMA = Hydroxyethylmethacrylat | | | | | | | | | |

### Variante C: Verwendung von N-Polyethylenglycol-N,N,N-diallylmethylammoniumsulfat

Ein temperierbarer 1000 ml Doppelwandreaktor wird mit KPG-Rührer, Stickstoffeinleitung sowie zwei Dosiereinrichtungen ausgestattet. Eine dient hierbei der Dosierung von Wasserstoffperoxid, die andere der Dosierung der Monomere.

0,1 mol Polyethylenglycol-N,N,N-diallylmethylammoniumsulfat wird im Doppelwandreaktor vorgelegt und mit 30 mol-% Reduktionsmittel (z.B. Rongalit) sowie 0,2 mol-% FeSO₄*H₂O (jeweils bezogen auf die Molmenge der Monomere) versetzt. Um zu vermeiden, dass die Viskosität im Verlaufe der Polymerisation zu stark anwächst, wird nun soviel Wasser zugegeben, dass eine ca. 40-50 %ige Monomerlösung entsteht. Diese Lösung wird durch Durchleiten des Inertgases (z.B. Stickstoff) sauerstofffrei gemacht und auf 15 °C temperiert. Anschließend wird der pH-Wert auf ca. 2-3 eingestellt.

Zum Starten der Reaktion wird nun über die eine Dosiereinrichtung ein Gemisch aus 3g Wasserstoffperoxid (30%ig) und 47g Wasser über einen Zeitraum von 2 Stunden in den Doppelwandreaktor gepumpt. Zeitgleich werden mittels der zweiten Dosiereinrichtung die Comonomere (Mengen gemäß Tabelle 2) über einen Zeitraum von einer Stunde zugepumpt. (Perfusorpumen aus dem medizinischen Bereich erlauben eine besonders exakte Kontrolle der Dosierrate.)

Es wird noch eine weitere Stunde gerührt und anschließend der pH-Wert auf 7 gestell. Die so erhaltene Polymerlösung ist gebrauchsfertig.

**Tabelle 2**

| **Nr.** | **Beispiel Nr.** | **N-PEG-N,N,N-Diallylmethyl-ammoniumsulfat** | | **EGMAP** | **HEMA** | **Mₙ(GPC)** |
|---|---|---|---|---|---|---|
| | | **MW** | **[mol]** | **[mol]** | **[mol]** | **[g/mol]** |
| 1 | 21 | 2000 | 0,1 | 0,1 | 0 | 18110 |
| 2 | 22 | 2000 | 0,1 | 0,12 | 0 | 20050 |
| 3 | 23 | 2000 | 0,1 | 0,12 | 0,12 | 25510 |
| 4 | 24 | 2000 | 0,1 | 0,12 | 0,24 | 28300 |

| | | | | | | |
|---|---|---|---|---|---|---|
| EGMAP = Ethylenglycolmethacrylatphosphat, HEMA = Hydroxyethylmethacrylat | | | | | | |

### B Mörteltests zur Bestimmung des Wasserreduktionsvermögens und Erhaltung der Fließfähigkeit über einen Zeitraum von 90 min

Die Durchführung der Test erfolgte gemäß (DIN EN 1015-3).
Tabelle 3: Ergebnisse der Mörtelausbreitversuche mit CEM I 42,5 R v.02.03 Karlstadt. Rilem Mischer

**Tabelle 3**

| **Nr.** | **Beispiel** | **Dosierung** | **w/z** | **Ausbreitmaß [cm]** | | | |
|---|---|---|---|---|---|---|---|
| | | **[g/kg Zem.]** | | **10min** | **30min** | **60min** | **90min** |
| 1 | Referenz | 0 | 0,57 | 24,7 | 23,4 | 23,0 | 22,5 |
| 2 | 1 | 2 | 0,48 | 24,3 | 23,1 | 21,2 | 20,8 |
| 3 | 2 | 2 | 0,49 | 23,8 | 22,9 | 22,3 | 21,1 |
| 4 | 3 | 2 | 0,44 | 23,2 | 22,8 | 21,4 | 20,6 |
| 5 | 4 | 2 | 0,44 | 23,7 | 22,1 | 21,4 | 21,2 |
| 6 | 5 | 2 | 0,44 | 25,8 | 23,6 | 22,2 | 21,0 |
| 7 | 6 | 2 | 0,44 | 25,1 | 24,5 | 22,3 | 21,7 |
| 8 | 7 | 2 | 0,42 | 24,6 | 24,9 | 24 | 23,5 |
| 9 | 8 | 2 | 0,41 | 24,1 | 23,8 | 23,4 | 22,9 |
| 10 | 9 | 2 | 0,44 | 23,6 | 22,2 | 21,5 | 21,1 |
| 11 | 10 | 2 | 0,43 | 23,9 | 23,1 | 22,6 | 22,3 |
| 12 | 11 | 2 | 0,43 | 23,5 | 23,2 | 22,5 | 22,5 |
| 13 | 12 | 2 | 0,44 | 25,3 | 23,8 | 22,5 | 20,8 |
| 14 | 13 | 2 | 0,41 | 23,9 | 23,4 | 23,2 | 23,0 |
| 15 | 14 | 2 | 0,38 | 25,1 | 23,0 | 22,2 | 19,9 |
| 16 | 15 | 2 | 0,37 | 24,5 | 22,9 | 21,0 | 19,7 |
| 17 | 16 | 2 | 0,41 | 23,8 | 22,9 | 22,2 | 21,5 |
| 18 | 17 | 2 | 0,42 | 24,3 | 23,9 | 23,1 | 22,3 |
| 19 | 18 | 2 | 0,365 | 26,0 | 22,9 | 20,6 | 19,9 |
| 20 | 19 | 2 | 0,43 | 23,3 | 22,9 | 22,1 | 21,3 |
| 21 | 20 | 2 | 0,45 | 24,1 | 23,6 | 22,3 | 21,0 |
| 22 | 21 | 2 | 0,46 | 24,6 | 24,9 | 24 | 23,5 |
| 23 | 22 | 2 | 0,45 | 24,2 | 23,6 | 23,0 | 22,4 |
| 24 | 23 | 2 | 0,48 | 23,6 | 23,2 | 22,5 | 21,9 |
| 25 | 24 | 2 | 0,49 | 23,9 | 23,7 | 23,1 | 22,8 |

Aus Tabelle 3 wird deutlich, dass der Wasserbedarf, der notwendig ist, um einen Mörtel auf ein bestimmtes Ausbreitmaß zu verflüssigen, durch den Zusatz der erfindungsgemäßen Polymere drastisch verringert werden kann. Verzichtet man auf die Zugabe eines Fließmittel (Eintrag 1 in Tabelle 3), so wird ein Wasser-Zementverhältnis von 0,57 benötigt, um ein Ausbreitmaß von 24,7 cm zu erreichen. Im Verlaufe von 90 min sinkt das Ausbreitmaß auf 22,5 cm ab, da der Mörtel aufgrund der einsetzenden Hydratationsvorgänge steifer wird.

Im besten Falle (Eintrag 19, Tabelle 3) war es durch Zugabe des erfindungsgemäßen Fließmittels 18 möglich, den Wasserbedarf um 36% zu senken und dennoch eine gegenüber der Referenz (Eintrag 1, Tabelle 3) flüssigere Konsistenz zu erreichen (Ausbreitmaß 26 cm gegenüber 24,7 cm beim Referenzmörtel). Allerdings ließ die gute Verflüssigungswirkung schon nach 30 min rasch nach. Durch geeignete Wahl der Monomere bzw. Monomerverhältnisse ist es jedoch möglich, den Wasserbedarf deutlich zu reduzieren und dennoch einen guten Erhalt der Konsistenz über 90 min zu erzielen (Tabelle 3, Einträge 7, 11 und 13).

### C Betontests zur Bestimmung des Wasserreduktionsvermögens und Erhaltung der Fließfähigkeit über einen Zeitraum von 90 min

Die Durchführung der Tests erfolgte gemäß DIN EN 206-1, DIN EN 12350-2 und DIN EN 12350-5.

Zement: Bernburg CEM I 42,5 R, 320kg, Füller: 50kg Kalksteinmehl, Dosierung: 0,2 Gew.-% bez. auf Zement, Temperatur: 20°C.

Bei dieser Testserie wurde das Wasser-Zementverhältnis so gewählt, dass für alle Proben nach Beendigung des Mischvorgangs ein einheitlicher Slump-Wert von ca. 20-21cm erreicht wurde.

Der Slump-Wert ist ein Maß dafür, wie stark der Betonkuchen nach dem abheben des Metallkonus kollabiert (Höhendifferenz zwischen der Oberkante des Metallkonus und der Höhe des Betonkuchens nach dem Abziehen der Metallform). Der Slump-Flow entspricht dem Basisdurchmesser des Betonkonus nach dem Zusammensacken. Das Ausbreitmaß erhält man, indem der Ausbreit-Tisch, gemäß der oben genannten DIN-Verfahren, durch 10-maliges Anheben und Aufstoßen erschüttert wird. Die durch das "Klopfen" auftretenden Scherkräfte bewirken ein weiteres Ausbreiten des Betons. Der Durchmesser des Betonkuchens nach dem "Klopfen" wird als Ausbreitmaß bezeichnet.

Wie schon im Mörtel, so zeigen die erfindungsgemäßen Polymere auch im Beton eine deutliche Verflüssigungswirkung. Der Wasserbedarf konnte gegenüber dem Beton ohne Fließmittelzusatz (Tabelle 4, Eintrag 1) von w/z = 0,6 auf bis zu 0,4 abgesenkt werden (Tabelle 4, Eintrag 9).

Eine sehr geringen w/z-Werten nimmt jedoch die Verarbeitbarkeit des Betons über den Zeitraum von einer Stunde bereits deutlich ab.

Die Ergebnisse der Betontests sind in Tabelle 4 zusammengefasst:

**Tabelle 4: Betontests**

| **Nr.** | **Beispiel** | **w/z** | **Dos.** | **Slump [cm] nach** | | | | **Slump-Flow [cm] nach** | | | | **Ausbreitmaß [cm] nach** | | | |
|---|---|---|---|---|---|---|---|---|---|---|---|---|---|---|---|
| | | | | **[min]** | | | | **[min]** | | | | **[min]** | | | |
| | | | | 0 | 10 | 40 | 60 | 0 | 10 | 40 | 60 | 0 | 10 | 40 | 60 |
| 1 | Referenz | 0,60 | -- | 21 | 21 | 17 | 17 | 33 | 31 | 26 | 25 | 61 | 59,5 | 56 | 54 |
| 2 | 5 | 0,49 | 0,20% | 21 | 20 | 19 | 18 | 36 | 36 | 34 | 28 | 59,5 | 58,5 | 54,5 | 52 |
| 3 | 6 | 0,52 | 0,20% | 21 | 23 | 22,5 | 22 | 35 | 40 | 38 | 34 | 58 | 61 | 59 | 56 |
| 4 | 7 | 0,50 | 0,20% | 21 | 22 | 20,5 | 19 | 36 | 38 | 35 | 31 | 59 | 60 | 57 | 55 |
| 5 | 8 | 0,46 | 0,20 % | 21 | 21 | 18 | 17 | 36 | 37 | 31 | 26 | 59,5 | 58 | 52,5 | 48,5 |
| 6 | 11 | 0,50 | 0,20% | 21 | 21 | 20,0 | 19 | 37 | 36 | 36 | 31 | 61 | 60 | 59 | 55 |
| 7 | 13 | 0,44 | 0,20% | 20 | 19 | 18 | 17 | 36 | 34 | 27 | 23 | 58 | 56 | 52,5 | 48 |
| 8 | 22 | 0,45 | 0,20% | 22 | 20 | 19 | 17 | 37 | 36 | 32 | 25 | 59,5 | 58 | 55 | 50 |
| 9 | 14 | 0,40 | 0,20% | 20 | 18 | 6,5 | -- | 35 | 31 | 20 | -- | 54 | 51 | 39 | -- |
| 10 | 16 | 0,42 | 0,20% | 21 | 20 | 16 | 9 | 35 | 34 | 25 | 20 | 59 | 58 | 49 | 46 |
| 11 | 19 | 0,45 | 0,20% | 21 | 20 | 18 | 17 | 35 | 33 | 28 | 26 | 59 | 58,5 | 51,5 | 48 |

Bemerkenswerterweise konnte eine stark verzögernde Wirkung, wie man sie von nicht polymergebundenen Phosphaten kennt, nicht beobachtet werden.

## Patentansprüche

1. Copolymere erhältlich durch die radikalische Copolymerisation einer vinylischen Poly(alkylenoxid-)Verbindung (A) der allgemeinen Formel (I),
R¹-O-(CₘH₂ₘO)ₙ₋₁-CₘH₂ₘ-Z (I)
wobei
R¹ = Wasserstoff, ein C₁-C₂₀-Alkylrest, ein C₅-C₁₂-Cycloalkylrest, ein
ggf. substituierter C₆-C₁₄-Arylrest,
m = 2 bis 4,
n = 1 bis 250,
Z = 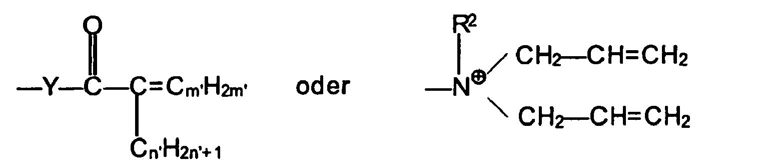 Y = O oder NR²,
R² = Wasserstoff, C₁-C₁₂-Alkylrest, C₆-C₁₄-Arylrest,
-CₘH₂ₘ-(O-CₘH₂ₘ)ₙ₋₁-OR¹,
m' = 1 bis 4,
n' = 0 bis 2
bedeuten,
mit einer ethylenisch ungesättigten Monomer-Verbindung (B) der allgemeinen Formel (II), 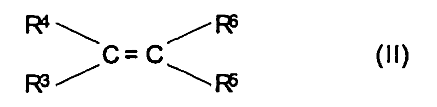 wobei
R³, R⁴ und R⁵ unabhängig voneinander Wasserstoff, ein C₁-C₄-Alkylrest
oder ein ggf. substituierter C₆-C₁₄-Arylrest sowie
R⁶ = -PO₃H₂,
-CH₂-N(CH₂-PO₃H₂)₂, 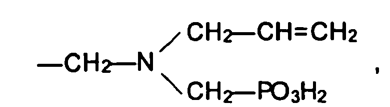
-(CH₂)ₓ-PO₃H₂,
-(CH₂)ₓ-O-PO(OH)₂,
-CO-O-(CH₂)ₓPO₃H₂,
-CO-O-(CH₂)ₓ-O-PO(OH)₂,
-CO-O-(Cₙ"H₂ₙ"O)ₓ-PO₃H₂,
-CO-NH-(Cₙ"H₂ₙ"O)ₓPO₃H₂,
-CO-O-CH₂-CH(OH)-CH₂O-PO₃H₂,
-CO-O-(CH₂)ₓ-N(CH₂)ₓ-PO₃H₂)₂, 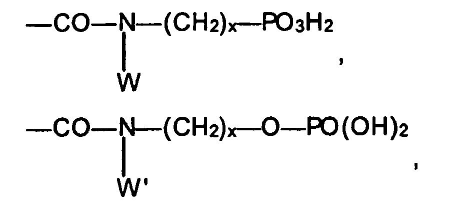 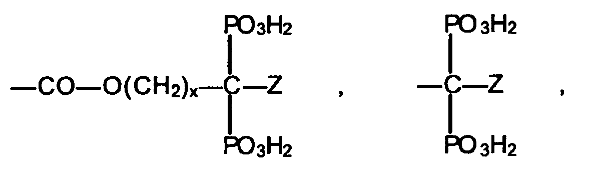
-Ar-PO₃H₂,
-Ar-O-PO(OH)₂,
-CO-O-Ar-PO₃H₂,
-CO-O-Ar-O-PO(OH)₂,
-CO-NH-Ar-PO₃H₂,
-CO-NH-Ar-O-PO(OH)₂,
W = H, -(CH₂)ₓ-PO₃H₂,
W' = H, -(CH₂)ₓ-O-PO(OH)₂,
Z = H, OH, NH₂,
Ar = ein ggf. mit H-, C₁-C₄-Alkyl-, COOH-Gruppen substituierter C₆-C₁₀-Arylrest,
n" = 2 oder 3,
x = 1 bis 12
bedeuten, mit der Maßgabe, dass es sich nicht um ein Copolymer, erhältlich durch radikalische Copolymerisation nach der catalytical chain transfer (CCT)-Methode, handelt, wenn
in Verbindung (A) der allgemeinen Formel (I) 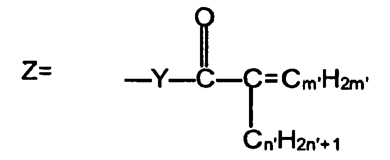 und
in Verbindung (B) der allgemeinen Formel (II)
R³ = H oder C₆-C₁₄-Aryl, ggf. substituiert mit OH und/oder COOH
R⁴ = H oder CH₃
R⁵ = H oder CH₃
bedeuten und
R⁶ ein Rest ist ausgewählt aus der Gruppe bestehend aus:
-PO₃H₂
-CO-O-(CH₂)ₓ-PO₃H₂
-CO-O-(CH₂)ₓ-O-PO(OH)₂ 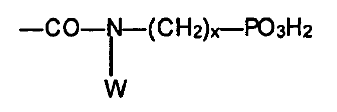
W = H, -(CH₂)ₓ-PO₃H₂ 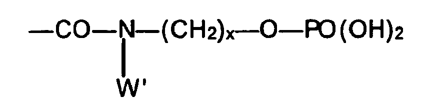 W' = H, -(CH₂)ₓ-O-PO(OH)₂
mit x=1-12,
oder
in Verbindung (B) der allgemeinen Formel (II)
R³ = H oder CH₃
R⁴ = H oder CH₃ oder C₆-C₁₄-Aryl, ggf. substituiert mit OH und/oder COOH
R⁵ = H oder C₆-C₁₄-Aryl, ggf. substituiert mit OH und/oder COOH bedeuten und
R⁶ ein Rest ist ausgewählt aus der Gruppe bestehend aus:
-CO-O-(CH₂)ₓ-PO₃H₂
-CO-O-(CH₂)ₓ-O-PO(OH)₂ 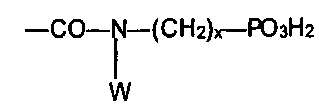
W = -(CH₂)ₓ-PO₃H₂ 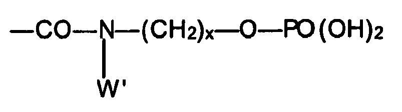 W' = -(CH₂)ₓ-O-PO(OH)₂
mit x=1-12.

2. Copolymere nach Anspruch 1, **dadurch gekennzeichnet, dass** in Formel (I) die Arylreste für R¹ noch Hydroxyl-, Carboxyl- oder SulfonsäureGruppen tragen.

3. Copolymere nach Anspruch 1 oder 2, **dadurch gekennzeichnet, dass** in der Formel (I) m = 2 oder 3 und n = 5 bis 250 bedeuten.

4. Copolymere nach einem der Ansprüche 1 bis 3, **dadurch gekennzeichnet, dass** in Formel (I) m' = 1 und n' = 0 oder 1 bedeuten.

5. Copolymere nach einem der Ansprüche 1 bis 4, **dadurch gekennzeichnet, dass** in Formel (I) R² = H, CH₃ oder C₂H₅ bedeuten.

6. Copolymere nach einem der Ansprüche 1 bis 5, **dadurch gekennzeichnet, dass** in Formel (I) die Arylreste für R³, R⁴ und R⁵ noch Hydroxyl-, Carboxyl- oder C₁-C₄-Alkyl-Substituenten aufweisen.

7. Copolymere nach einem der Ansprüche 1 bis 6, **dadurch gekennzeichnet, dass** die Phosphonsäure- oder sauren Phosphatestergruppen in Form von Alkali-, Erdalkali- oder AmmoniumSalzen vorliegen.

8. Copolymere nach einem der Ansprüche 1 bis 7, **dadurch gekennzeichnet, dass** die molaren Verhältnisse der vinylischen Poly(alkylenoxid-)Verbindung (A) mit der ethylenisch ungesättigten Monomer-Verbindung (B) auf 1 : 0,01 bis 1 : 100, vorzugsweise 1 : 0,1 bis 50, eingestellt wurden.

9. Copolymere nach einem der Ansprüche 1 bis 8, **dadurch gekennzeichnet, dass** sie 0 bis 70 Gew.-%, bezogen auf die Summe der Komponenten (A) und (B), einer ethylenisch ungesättigten Monomer-Verbindung (C) der allgemeinen Formel (III) enthalten 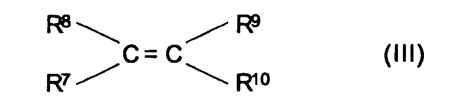 wobei
R⁷ = H, CH₃, COOM, COOR¹¹, CONR¹¹R¹¹,
R⁸ = H, ein ggf. mit Hydroxyl-, Carboxyl- oder C₁-C₄-Alkylgruppen
substituierter C₆-C₁₄-Arylrest,
R⁹ = H, CH₃ oder CH₂-COOR¹¹,
R¹⁰ = H, CH₃, COOM, COOR¹¹, ein ggf. mit Hydroxyl-, Carboxyl-
oder C₁-C₄-Alkylgruppen substituierter C₆-C₁₄-Arylrest, OR¹²,
SO₃M, CONH-R¹³-SO₃M,
R¹¹ =
H, C₁-C₁₂-Alkyl, C₁-C₁₂-Hydroxyalkyl, -(CH₂)ₓ-SO₃M,
R¹² = Acetyl,
R¹³ = ein linearer oder verzweigter C₁-C₆-Alkylenrest,
M = H, Alkali, Erdalkali oder Ammonium
bedeuten,
R⁷ und R¹⁰ zusammen für O-CO-O stehen können und
R¹, m, n und x oben genannte Bedeutung besitzen.

10. Copolymere nach einem der vorhergehenden Ansprüche, **dadurch gekennzeichnet, dass** sie wasserlöslich sind.

11. Verfahren zur Herstellung der Copolymere nach einem der Ansprüche 1 bis 10, **dadurch gekennzeichnet, dass** man die vinylische Poly(alkylenoxid-)Verbindung (A) sowie die ethylenisch ungesättigte Monomer-Verbindung (B) einer radikalischen Polymerisation in Gegenwart von geeigneten Katalysatoren bzw. Initiatoren bei 30 bis 150 °C unterwirft, mit der Maßgabe, dass die radikalische Polymerisation nicht nach der catalytical chain transfer (CCT)-Methode durchgeführt wird, wenn
in Verbindung (A) der allgemeinen Formel (I) 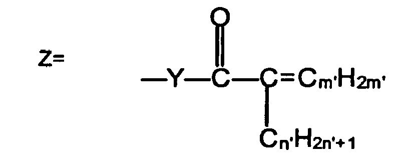 und
in Verbindung (B) der allgemeinen Formel (II)
R³ = H oder C₆-C₁₄-Aryl, ggf. substituiert mit OH und/oder COOH R⁴ = H oder CH₃
R⁵ = H oder CH₃
bedeuten und
R⁶ ein Rest ist ausgewählt aus der Gruppe bestehend aus:
-PO₃H₂
-CO-O-(CH₂)ₓ-PO₃H₂
-CO-O-(CH₂)ₓ-O-PO(OH)₂ 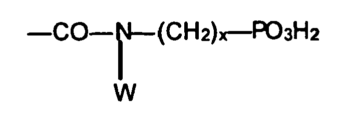
W = H, -(CH₂)ₓ-PO₃H₂ 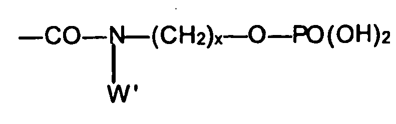 W' = H, -(CH₂)ₓ-O-PO(OH)₂
mit x=1-12,
oder
in Verbindung (B) der allgemeinen Formel (II)
R³ = H oder CH₃
R⁴ = H oder CH₃ oder C₆-C₁₄-Aryl, ggf. substituiert mit OH und/oder COOH
R⁵ = H oder C₆-C₁₄-Aryl, ggf. substituiert mit OH und/oder COOH bedeuten und
R⁶ ein Rest ist ausgewählt aus der Gruppe bestehend aus:
-CO-O-(CH₂)ₓ-PO₃H₂
-CO-O-(CH₂)ₓ-O-PO(OH)₂ 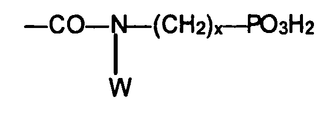
W = -(CH₂)ₓ-PO₃H₂ 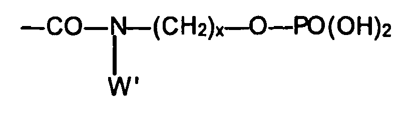 W' = -(CH₂)ₓ-O-PO(OH)₂
mit x=1-12.

12. Verfahren nach Anspruch 11, **dadurch gekennzeichnet, dass** man als Initiatoren Azoinitiatoren oder Redoxsysteme einsetzt.

13. Verfahren nach einem der Ansprüche 11 oder 12, **dadurch gekennzeichnet, dass** man die Polymerisation im Temperaturbereich zwischen 40 und 100 °C durchführt.

14. Verwendung der Copolymere nach den Ansprüchen 1 bis 10 als Dispergiermittel für wässrige Feststoff-Suspensionen.

15. Verwendung nach Anspruch 14, **dadurch gekennzeichnet, dass** die Copolymere in einer Menge von 0,01 bis 5 Gew.-%, bezogen auf die Feststoff-Suspension, eingesetzt werden.

16. Verwendung nach einem der Ansprüche 14 und 15, **dadurch gekennzeichnet, dass** die Feststoff-Suspension hydraulische Bindemittel auf Basis von Zement, Kalk, Gips und Anhydrit enthält.

17. Verwendung nach einem der Ansprüche 14 bis 16, **dadurch gekennzeichnet, dass** die Feststoff-Suspension anorganische Partikel, ausgewählt aus der Gruppe Gesteinsmehl, Silikatmehl, Kreide, Tone, Porzellanschlicker, Talkum, Pigmente, Ruß sowie Metall- und Kunststoffpulver enthält.

## Claims

1. Copolymers obtainable by the free radical copolymerization of a vinylic poly(alkylene oxide) compound (A) of the general formula (I),
R¹-O-(CₘH₂ₘO)ₙ₋₁-CₘH₂ₘ-Z (I)
in which
R¹ is hydrogen, a C₁-C₂₀-alkyl radical, a C₅-C₁₂-cycloalkyl
radical, an optionally substituted C₆-C₁₄-aryl radical,
m is from 2 to 4,
n is from 1 to 250,
Z is 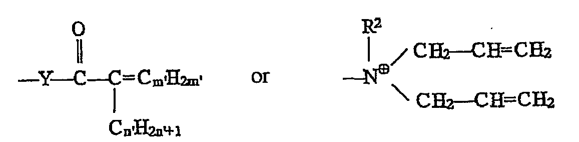 Y is O or NR²,
R² is hydrogen, C₁-C₁₂-alkyl radical, C₆-C₁₄-aryl radical,
-CₘH₂ₘ-(O-CₘH₂ₘ)ₙ₋₁-OR¹,
m' is from 1 to 4,
n' is from 0 to 2,
with an ethylenically unsaturated monomer compound (B) of the general formula (II) 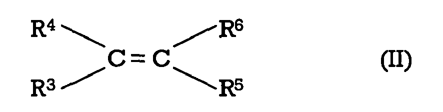 in which
R³, R⁴ and R⁵, independently of one another, are hydrogen, a C₁-C₄-
alkyl radical or an optionally substituted C₆-C₁₄-aryl radical and
R⁶ is -PO₃H₂,
-CH₂-N(CH₂-PO₃H₂)₂, 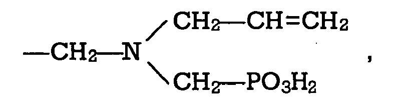
-(CH₂)ₓ-PO₃H₂,
-(CH₂)ₓ-O-PO(OH)₂,
-CO-O-(CH₂)ₓ-PO₃H₂,
-CO-O-(CH₂)ₓ-O-PO(OH)₂,
-CO-O-(Cₙ"H₂ₙ"O)ₓ-PO₃H₂,
-CO-NH-(Cₙ"H₂ₙ"O)ₓ-PO₃H₂,
-CO-O-CH₂-CH(OH)-CH₂O-PO₃H₂,
-CO-O-(CH₂)ₓ-N(CH₂-PO₃H₂)₂, 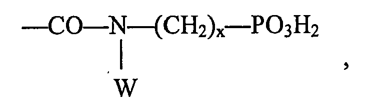 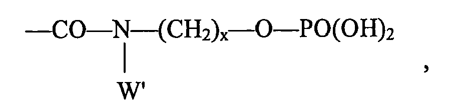 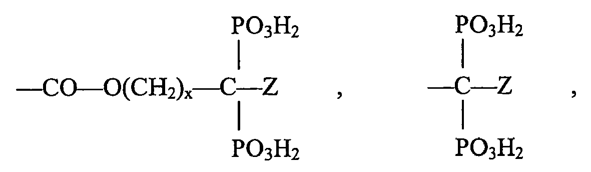
Ar-PO₃H₂,
Ar-O-PO(OH)₂,
-CO-O-Ar-PO₃H₂,
-CO-O-Ar-O-PO(OH)₂,
-CO-NH-Ar-PO₃H₂,
-CO-NH-Ar-O-PO(OH)₂,
W is H, -(CH₂)ₓ-PO₃H₂,
W' is H, -(CH₂)ₓ-O-PO(OH)₂,
Z is H, OH, NH₂,
Ar is a C₆-C₁₀-aryl radical optionally substituted by H, C₁-C₄-alkyl or COOH groups,
n" is 2 or 3,
x is from 1 to 12,
with the proviso that the copolymer in question is not a copolymer obtainable by free-radical copolymerization according to the catalytical chain transfer (CCT) method when in compound (A) of the general formula (I)
Z is 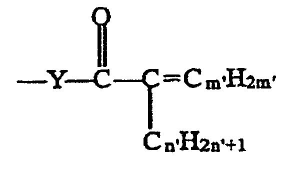 and
in compound (B) of the general formula (II)
R³ is H or C₆-C₁₄-aryl, optionally substituted by OH and/or COOH R⁴ is H or CH₃
R⁵ is H or CH₃
and
R⁶ is a radical selected from the group consisting of:
-PO₃H₂
-CO-O-(CH₂)ₓ-PO₃H₂
CO-O-(CH₂)ₓ-O-PO(OH)₂ 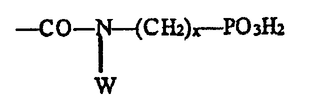
W is H, -(CH₂)ₓ-PO₃H₂ 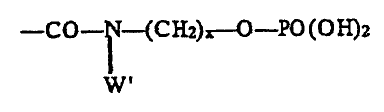 W' is H, -(CH₂)ₓ-O-PO(OH)₂
with x=1-12,
or
in compound (B) of the general formula (II)
R³ is H or CH₃
R⁴ is H or CH₃ or C₆-C₁₄-aryl, optionally substituted by OH and/or COOH
R⁵ is H or C₆-C₁₄-aryl, optionally substituted by OH and/or COOH and
R⁶ is a radical selected from the group consisting of:
-CO-O-(CH₂)ₓ-PO₃H₂
-CO-O-(CH₂)ₓ-O-PO(OH)₂ 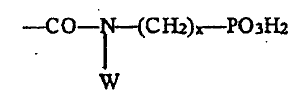
W is -(CH₂)ₓPO₃H₂ 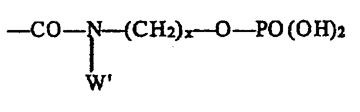 W' is -(CH₂)ₓ-O-PO(OH)₂
with x=1-12.

2. Copolymers according to Claim 1, **characterized in that**, in formula (I), the aryl radicals for R¹ also carry hydroxyl, carboxyl or sulfo groups.

3. Copolymers according to Claim 1 or 2, **characterized in that**, in the formula (I), m is 2 or 3 and n is from 5 to 250.

4. Copolymers according to any of Claims 1 to 3, **characterized in that**, in formula (I), m' is 1 and n' is 0 or 1.

5. Copolymers according to any of Claims 1 to 4, **characterized in that**, in formula (I), R² is H, CH₃ or C₂H₅.

6. Copolymers according to any of Claims 1 to 5, **characterized in that**, in formula (I), the aryl radicals for R³, R⁴ and R⁵ also have hydroxyl, carboxyl or C₁-C₄-alkyl substituents.

7. Copolymers according to any of Claims 1 to 6, **characterized in that** the phosphonic acid or acidic phosphate ester group are present in the form of alkali metal, alkaline earth metal or ammonium salts.

8. Copolymers according to any of Claims 1 to 7, **characterized in that** the molar ratios of the vinylic poly(alkylene oxide) compound (A) to the ethylenically unsaturated monomer compound (B) were adjusted to 1:0.01 to 1:100, preferably 1:0.1 to 50.

9. Copolymers according to any of Claims 1 to 8, **characterized in that** it contains from 0 to 70% by weight, based on the sum of the components (A) and (B), of an ethylenically unsaturated monomer compound (C) of the general formula (III) 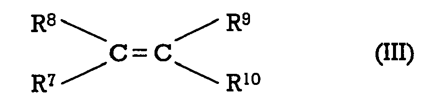 in which
R⁷ is H, CH₃, COOM, COOR¹¹, CONR¹¹R¹¹,
R⁸ is H, a C₆-C₁₄-aryl radical optionally substituted by
hydroxyl, carboxyl or C₁-C₄-alkyl groups,
R⁹ is H, CH₃ or CH₂-COOR¹¹,
R¹⁰ is H, CH₃, COOM, COOR¹¹, a C₆-C₁₄-aryl radical
optionally substituted by hydroxyl, carboxyl or C₁-C₄-alkyl groups, or OR¹², SO₃M, CONH-R¹³-SO₃M,
R¹¹ is H, C₁-C₁₂-alkyl, C₁-C₁₂-hydroxyalkyl, -(CH₂)ₓ-O₃M,
-CₘH₂ₘ-(O-CₘH₂ₘ)ₙ₋₁-OR¹
R¹² is acetyl,
R¹³ is a linear or branched C₁-C₆-alkylene radical,
M is H, alkali metal, alkaline earth metal or ammonium,
R⁷ and R¹⁰ together may be O-CO-O and
R¹, m, n and x have the abovementioned meaning.

10. Copolymers according to any of the preceding claims, **characterized in that** it is water-soluble.

11. Process for the preparation of the copolymers according to any of Claims 1 to 10, **characterized in that** the vinylic poly(alkylene oxide) compound (A) and the ethylenically unsaturated monomer compound (B) are subjected to a free radical polymerization in the presence of suitable catalysts or intiators at from 30 to 150°C, with the proviso that the free-radical polymerization is not carried out by the catalytical chain transfer (CCT) method when in compound (A) of the general formula (I)
Z is 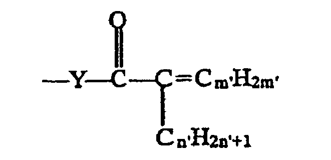 and
in compound (B) of the general formula (II)
R³ is H or C₆-C₁₄-aryl, optionally substituted by OH and/or COOH R⁴ is H or CH₃
R⁵ is H or CH₃
and
R⁶ is a radical selected from the group consisting of:
-PO₃H₂
—CO-O-(CH₂)ₓ-PO₃H₂
-CO-O-(CH₂)ₓ-O-PO(OH)₂ 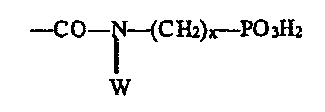
W is H, -(CH₂)ₓ-PO₃H₂ 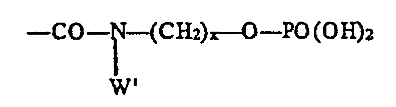 W' is H, -(CH₂)ₓ-O-PO(OH)₂
with x=1-12,
or
in compound (B) of the general formula (II)
R³ is H or CH₃
R⁴ is H or CH₃ or C₆-C₁₄-aryl, optionally substituted by OH and/or COOH
R⁵ is H or C₆-C₁₄-aryl, optionally substituted by OH and/or COOH and
R⁶ is a radical selected from the group consisting of:
-CO-O-(CH₂)ₓ-PO₃H₂
--C(CH₂)ₓ-O-PO(OH)₂ 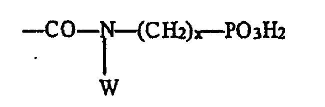
W is -(CH₂)ₓPO₃H₂ 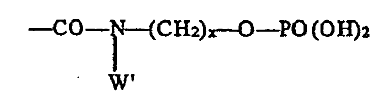 W' is -(CH₂)ₓ-O-PO(OH)₂
withx=1-12.

12. Process according to Claim 11, **characterized in that** the initiators used are azo initiators or redox systems.

13. Process according to either of Claims 11 and 12, **characterized in that** the polymerization is carried out in the temperature range from 40 to 100°C.

14. Use of the copolymers according to any of Claims 1 to 10 as dispersants for aqueous solid suspensions.

15. Use according to Claim 14, **characterized in that** the copolymers are used in an amount of from 0.01 to 5% by weight, based on the solid suspension.

16. Use according to either of Claims 14 and 15, **characterized in that** the solid suspension contains hydraulic binders based on cement, lime, gypsum and anhydrite.

17. Use according to any of Claims 14 to 16, **characterized in that** the solid suspension contains inorganic particles selected from the group consisting of rock flour, silicate flour, chalk, clays, porcelain slips, talc, pigments, carbon black and metal and plastic powder.

## Revendications

1. Copolymères pouvant être obtenus par copolymérisation radicalaire d'un composé polyoxyalkylène vinylique (A) de formule générale (I),
R¹-O- (-CₘH₂ₘO-) ₙ₋₁-CₘH₂ₘ-Z (I)
dans laquelle
R¹ représente un atome d'hydrogène, un radical alkyle
en C₁-C₂₀, un radical cycloalkyle en C₅-C₁₂, un radical aryle en C₆-C₁₄ éventuellement substitué,
m = 2 à 4,
n = 1 à 250,
Z représente 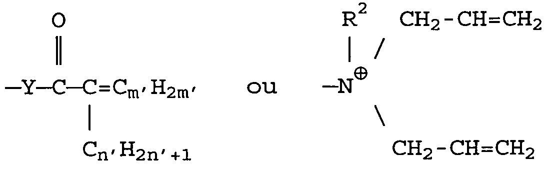 Y représente O ou NR²,
R² représente un atome d'hydrogène, un radical alkyle
en C₁-C₁₂, un radical aryle en C₆-C₁₄.
-CₘH₂ₘ- (-O-CₘH₂ₘ-)ₙ₋₁-OR¹ ,
m' = 1 à 4,
n' = 0 à 2,
avec un composé monomère à insaturation éthylénique (B) de formule générale (II) 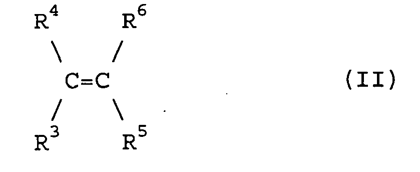 dans laquelle
R³, R⁴ et R⁵ représentent chacun indépendamment un atome
d'hydrogène, un radical alkyle en C₁-C₄ ou un radical aryle en C₆-C₁₄ éventuellement substitué et
R⁶ = -PO₃H₂ , 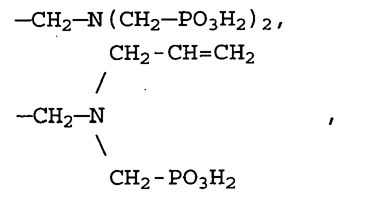
-(CH₂)ₓ-PO₃H₂,
- (CH₂) ₓ-O-PO(OH)₂,
-CO-O- (CH₂)ₓ-PO₃H₂,
-CO-O-(CH₂)ₓ-O-PO(OH)₂,
-CO-O-(Cₙ"H_{2n"}O)ₓ-PO₃H₂,
-CO-NH-(C_{n"}H_{2n"}O)ₓ-PO₃H₂,
-CO-O-CH₂-CH(OH)-CH₂O-PO₃H₂,
-CO-O- (CH₂)ₓN(CH₂-PO₃H₂)₂, 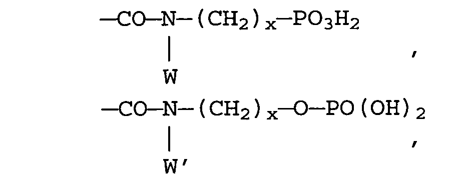 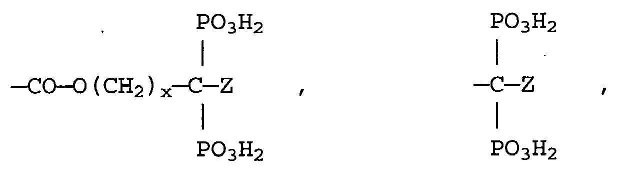
-Ar-PO₃H₂,
Ar-O-PO(OH)₂,
-CO-O-Ar-PO₃H₂,
-CO-O-Ar-O-PO(OH)₂,
-CO-NH-Ar-PO₃H₂,
-CO-NH-Ar-O-PO(OH)₂ ,
W = H, -(CH₂)ₓ-PO₃H₂,
W' = H, -(CH₂)ₓ-O-PO(OH)₂,
Z = H, OH, NH₂,
Ar représente un radical aryle en C₆-C₁₀
éventuellement substitué par des groupes H, alkyle en C₁-C₄, COOH,
n" = 2 ou 3,
x = 1 à 12,
étant entendu qu'il ne s'agit pas d'un copolymère pouvant être obtenu par copolymérisation radicalaire selon la méthode de transfert catalytique de chaîne (CCT), lorsque
dans le composé (A) de formule générale (I)
Z
représente 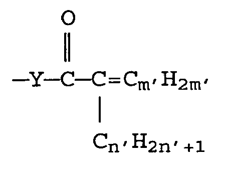 et
dans le composé (B) de formule générale (II) R³ représente H ou un groupe aryle en C₆-C₁₄.
éventuellement substitué par OH et/ou COOH R⁴ représente H ou CH₃,
R⁵ représente H ou CH₃
et
R⁶ est un radical choisi dans l'ensemble constitué
par :
-PO₃H₂
-CO-O-(CH₂)ₓ-PO₃H₂,
-CO-O- (CH₂)ₓ-O-PO(OH)₂, 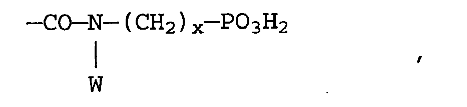
W = H, -(CH₂)ₓ-PO₃H₂ 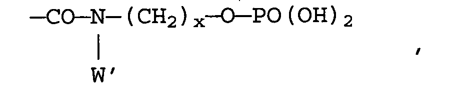 W' = H, -(CH₂)ₓ-O-PO(OH)₂
où x = 1-12,
ou
dans le composé (B) de formule générale (II) R³ représente H ou CH₃
R⁴ représente H ou CH₃ ou un groupe aryle en C₆-C₁₄
éventuellement substitué par OH et/ou COOH R⁵ représente H ou un groupe aryle en C₆-C₁₄
éventuellement substitué par OH et/ou COOH
et
R⁶ est un radical choisi dans l'ensemble constitué
par :
-CO-O-(CH₂)ₓ-PO₃H₂,
-CO-O-(CH₂)ₓ-O-PO(OH)₂, 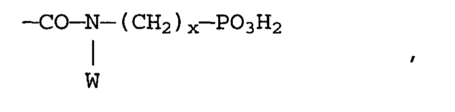
W=-(CH₂)ₓ-PO₃H₂ 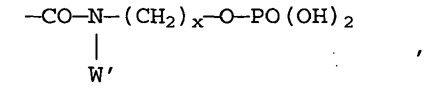 W' = -(CH₂)ₓ-O-PO(OH)₂
où x = 1-12.

2. Copolymères selon la revendication 1, **caractérisés en ce que** dans la formule (I) les radicaux aryle pour R¹ portent encore des groupes hydroxy, carboxy ou sulfo.

3. Copolymères selon la revendication 1 ou 2, **caractérisés en ce que** dans la formule (I) m vaut 2 ou 3 et n vaut de 5 à 250.

4. Copolymères selon l'une quelconque des revendications 1 à 3, **caractérisés en ce que** dans la formule (I) m' vaut 1 et n' vaut 0 ou 1.

5. Copolymères selon l'une quelconque des revendications 1 à 4, **caractérisés en ce que** dans la formule (I) R² représente H, CH₃ ou C₂H₅.

6. Copolymères selon l'une quelconque des revendications 1 à 5, **caractérisés en ce que** dans la formule (I) les radicaux aryle pour R³, R⁴ et R⁵ comportent encore des substituants hydroxy, carboxy ou alkyle en C₁-C₄.

7. Copolymères selon l'une quelconque des revendications 1 à 6, **caractérisés en ce que** les groupes phosphono ou esters phosphate acides se trouvent sous forme de sels alcalins, alcalino-terreux ou d'ammonium.

8. Copolymères selon l'une quelconque des revendications 1 à 7, **caractérisés en ce que** les rapports molaires du composé polyoxyalkylène vinylique (A) au composé monomère à insaturation éthylénique (B) ont été ajustés à une valeur allant de 1:0,01 à 1:100, de préférence de 1:0,1 à 50.

9. Copolymères selon l'une quelconque des revendications 1 à 8, **caractérisés en ce qu'**ils contiennent de 0 à 70 % en poids, par rapport à la somme des composants (A) et (B), d'un composé monomère (C) à insaturation éthylénique (C) de formule générale (III) 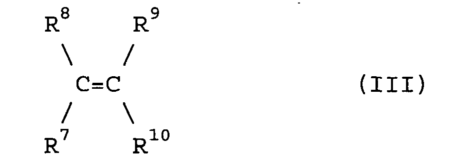 dans laquelle
R⁷ représente H, CH₃, COOM, COOR¹¹, CONR¹¹R¹¹,
R⁸ représente H, un radical aryle en C₆-C₁₄
éventuellement substitué par des groupes hydroxy, carboxy ou alkyle en C₁-C₄,
R⁹ représente H, CH₃ ou CH₂-COOR¹¹,
R¹⁰ représente H, CH₃, COOM, COOR¹¹, un radical aryle
en C₆-C₁₄ éventuellement substitué par des groupes hydroxy, carboxy ou alkyle en C₁-C₄, ou représente OR¹², SO₃M, CONH-R¹³-SO₃M,
R¹¹ représente H, un groupe alkyle en C₁-C₁₂, hydroxyalkyle en C₁-C₁₂, -(CH₂)ₓ-SO₃M,
-CₘH₂ₘ-(-O-CₘH₂ₘ-)ₙ₋₁-OR¹,
R¹² représente un groupe acétyle,
R¹³ représente un radical alkylène en C₁-C₆ linéaire ou ramifié,
M représente H, un atome de métal alcalin, alcalino-terreux ou le groupe ammonium,
R⁷ et R¹⁰ peuvent représenter ensemble O-CO-O et
R¹, m, n et x ont les significations données plus haut.

10. Copolymères selon l'une quelconque des revendications précédentes, **caractérisés en ce qu'**ils sont hydrosolubles.

11. Procédé pour la préparation des copolymères selon l'une quelconque des revendications 1 à 10, **caractérisé en ce qu'**on soumet le composé polyoxyalkylène vinylique (A) ainsi que le composé monomère à insaturation éthylénique (B) à une polymérisation radicalaire à une température de 30 à 150 °C, en présence de catalyseurs ou d'amorceurs appropriés, étant entendu que la polymérisation radicalaire n'est pas effectuée selon la méthode de transfert catalytique de chaîne (CCT), lorsque
dans le composé (A) de formule générale (I)
Z représente 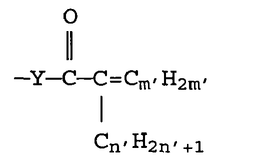 et
dans le composé (B) de formule générale (II)
R³ représente H ou un groupe aryle en C₆-C₁₄,
éventuellement substitué par OH et/ou COOH
R⁴ représente H ou CH₃,
R⁵ représente H ou CH₃
et
R⁶ est un radical choisi dans l'ensemble constitué
par :
-PO₃H₂
-CO-O-(CH₂)ₓ-PO₃H₂,
-CO-O-(CH₂)ₓ-O-PO(OH)₂, 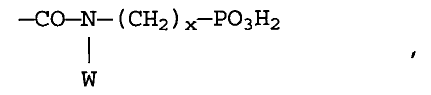
W = H, -(CH₂)ₓ-PO₃H₂ 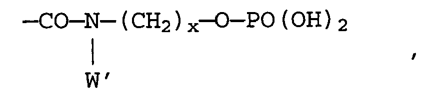 W' = H, -(CH₂)ₓ-O-PO(OH)₂
où x = 1-12,
ou
dans le composé (B) de formule générale (II)
R³ représente H ou CH₃
R⁴ représente H ou CH₃ ou un groupe aryle en C₆-C₁₄
éventuellement substitué par OH et/ou COOH
R⁵ représente H ou un groupe aryle en C₆-C₁₄
éventuellement substitué par OH et/ou COOH
et
R⁶ est un radical choisi dans l'ensemble constitué
par :
-CO-O-(CH₂)ₓ-PO₃H₂,
-CO-O-(CH₂)ₓ-O-PO(OH)₂, 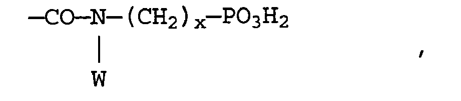
W = -(CH₂)ₓ-PO₃H₂ 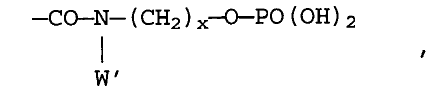 W' = -(CH₂)ₓ-O-PO(OH)₂ où x = 1-12,

12. Procédé selon la revendication 11, **caractérisé en ce qu'**on utilise comme amorceurs des amorceurs azo ou des systèmes redox.

13. Procédé selon la revendication 11 ou 12, **caractérisé en ce que** la polymérisation est effectuée dans la plage de température comprise entre 40 et 100 °C.

14. Utilisation des copolymères selon les revendications 1 à 10, en tant que dispersant pour suspensions aqueuses de matières solides.

15. Utilisation selon la revendication 14, **caractérisée en ce que** les copolymères sont utilisés en une quantité de 0,01 à 5 % en poids, par rapport à la suspension de matières solides.

16. Utilisation selon la revendication 14 ou 15, **caractérisée en ce que** la suspension de matières solides contient des liants hydrauliques à base de ciment, chaux, plâtre et anhydrite.

17. Utilisation selon l'une quelconque des revendications 14 à 16, **caractérisée en ce que** la suspension de matières solides contient des particules inorganiques, choisies dans le groupe constitué par la poudre de roche, la poudre de silicate, la craie, les argiles, la barbotine de porcelaine, le talc, des pigments, le noir de carbone ainsi que les poudres métalliques et de matières plastiques.
